# EUROPEAN PATENT SPECIFICATION

(11) **EP 3 085 515 B1**
(45) Date of publication and mention of the grant of the patent: **22.02.2023**
(21) Application number: 14871979.2
(22) Date of filing: 17.12.2014
(51) Int. Cl.: B29C 49/00, B29C 49/04, B29C 49/20, B65D 1/00, C08J 5/04, C08K 7/02, C08L 81/02, B29B 15/12, B29K 81/00, B29L 22/00, B29L 31/00, B29K 267/00, B29K 305/00, B29K 105/06, B29B 15/14, B29K 307/04, B29K 309/08, C08K 7/14, B29K 105/12

(54) **RESIN COMPOSITION FOR BLOW HOLLOW MOLDED ARTICLES, BLOW HOLLOW MOLDED ARTICLE AND METHOD FOR PRODUCING SAME**
HARZZUSAMMENSETZUNG FÜR BLASGEFORMTE HOHLKÖRPER, BLASGEFORMTER HOHLKÖRPER UND VERFAHREN ZUR HERSTELLUNG DAVON
COMPOSITION DE RÉSINE POUR ARTICLES CREUX MOULÉS PAR SOUFFLAGE, ARTICLE CREUX MOULÉ PAR SOUFFLAGE ET SON PROCÉDÉ DE PRODUCTION

(30) Priority: 18.12.2013 JP 2013261188; 30.10.2014 JP 2014221433
(43) Date of publication of application: 26.10.2016
(73) Proprietor: DIC Corporation, Tokyo 174-8520 (JP)
(72) Inventor: MARUYAMA Yutaka, Ichihara-shi Chiba 290-8585 (JP); YUDATE Yukihiko, Ichihara-shi Chiba 290-8585 (JP); UCHIGATA Masanori, Ichihara-shi Chiba 290-8585 (JP)
(74) Representative: Adam, Holger
(86) International application number: PCT/JP2014/083441
(87) International publication number: WO 2015/093537

(56) References cited:
- EP-A1- 1 642 703
- EP-A2- 0 358 135
- WO-A1-2004/080698
- WO-A1-2011/148929
- JP-A- H0 899 350
- JP-A- H05 302 028
- JP-A- 2006 124 647
- JP-A- 2011 136 505
- JP-A- 2011 256 387
- JP-B2- 3 486 423
- Science Direct: "Glass fibers", , 2020, Retrieved from the Internet: URL:https://www.sciencedirect.com/topics/e ngineering/glass-fibre

## Description

### Technical Field

The present invention relates to a blow-molded hollow article and a method for producing the molded article.

### Background Art

In recent years, methods for producing ducts in an engine room as automobile components by blow hollow molding have been in widespread use, and currently, polyamide-based materials are mainly used. However, since polyamide-based materials do not have sufficient heat resistance, materials for blow hollow molding having high heat resistance, chemical resistance, and impact resistance are required.

A polyarylene sulfide resin (hereinafter, may be abbreviated as a PAS resin) is engineering plastic having excellent heat resistance, chemical resistance, flame resistance, electrical characteristics, and the like, and there is a growing demand for use of the resin in electrical or electronic components, automobile components, precision machinery components, and the like.

Various attempts have been made to use materials for blow hollow molding using a polyarylene sulfide resin. However, when molding a polyarylene sulfide resin, it has extremely high melt fluidity, and thus in normal extrusion blow molding, that is, in a method for extruding and blow-molding a parison, there is a problem in that draw-down of the parison extremely increases, and it is very difficult to mold the parison to a container having small thickness unevenness. Accordingly, in most cases, this material is limited to be treated by an injection molding method, and molded articles of the polyarylene sulfide resin have a small size. The application thereof to large-sized components such as bottles and tanks through blow molding has been rarely performed.

As an example of the application of the polyarylene sulfide resin to the blow molding, a resin composition obtained by melting and kneading a polyarylene sulfide resin and an epoxy group-containing olefin-based copolymer has been known (PTL 1). However, regarding the polyarylene sulfide resin, its melt viscosity is high, but a proportion of terminal carboxy groups is high, and a large amount of low-molecular-weight components is contained. Therefore, there is room to improve moldability of the composition, such as draw-down resistance and thickness unevenness in performing the blow hollow molding, and particularly, a proportion of the reactants between the low-molecular-weight component of the polyarylene sulfide resin and the epoxy group-containing olefin-based copolymer is high, whereby there is also room to improve the mechanical strength, particularly, cold-thermal impact resistance, and the composition cannot be used under a harsh environment such as in the vicinity of an automobile engine.

A blow-molded hollow article excellent in moldability and mechanical strength such as cold-thermal impact resistance, which is provided by the combination of a high-molecular-weight linear polyarylene sulfide resin having a concentration with a certain amount of terminal carboxy groups and an olefin-based polymer, is known (PTL 2). However, when using the olefin-based polymer, a mechanical strength such as impact resistance can be imparted to a blow-molded hollow article containing the polyarylene sulfide resin, but the heat resistance decreases. Accordingly, there is a demand for a blow-molded hollow article to be excellent in mechanical strength such as impact resistance while maintaining excellent heat resistance of a polyarylene sulfide resin.

EP 0 358 135 A2 relates to a polyarylene sulfide resin composition containing less than 30% by weight of a styrene-based polymer having mainly syndiotactic configuration, and a polyarylene sulfide resin composition comprising 100 parts by weight of the above composition and 1 to 500 parts by weight of a filler.

JP H05 302028 A provides an article which is made from a polyamide resin of excellent blow moldability and is excellent in heat, impact and chemical resistances.

JP 3 486423 B2 relates to a polyphenylene sulfide resin with improved blow molding properties.

WO 2004/080698 A1 discloses a method of making a long fiber reinforced thermoplastic composite including supplying a hybrid yarn or commingled yarn (142, 146) to a lobed die (134, 136), the yarn including both thermoplastic fibers and reinforcing fibers in intimate contact wherein the yarn is from about 10 to about 90 weight percent thermoplastic fiber and from about 90 to about 10 weight percent reinforcing fiber.

EP 1 642 703 A1 provides a resin composition and a resin molded article capable of designing to make specific properties, in particular, fuel barrier properties, consistent with impact resistance.

K.K. Chawla, in Encyclopedia of Materials: Science and Technology, 2001 describes a glass fiber that is available in a variety of shapes and forms.

### Citation List

### Patent Literatures

[PTL 1] JP-A-3-236930
[PTL 2] WO2011/148929

### Summary of Invention

### Technical Problem

Accordingly, an object of the present invention is to provide a blow-molded hollow article which is excellent in moldability such as draw-down resistance and thickness unevenness in performing blow hollow molding and is excellent in mechanical strength such as impact resistance while maintaining excellent heat resistance of a polyarylene sulfide resin, a method for producing the blow-molded hollow article, a resin composition for blow-molded hollow articles for exclusively providing the blow-molded hollow article, and a method for producing the resin composition.

### Solution to Problem

The inventors have conducted intensive studies to solve the problems, and as a result, found that it is possible to provide a blow-molded hollow article which is excellent in mechanical strength such as impact resistance, a method for producing the blow-molded hollow article, and a resin composition for blow-molded hollow articles for exclusively providing the blow-molded hollow article by the combination of a fiber reinforcing material having a long fiber length with a polyarylene sulfide resin, and completed the present invention.

That is, the present invention relates to a method for producing a blow-molded hollow article containing a polyarylene sulfide resin (A) and a fiber reinforcing material (B) having a fiber length of 5 mm or more, comprising:
heating a long fiber-reinforced polyarylene sulfide resin composition (C) containing the polyarylene sulfide resin (A) and the fiber reinforcing material (B) having a fiber length of 5 mm or more at a temperature not lower than a melting point of the resin (A) so as to melt the resin (A) ; and wherein the fiber reinforcing material (B) is a glass fiber reinforcing material, and
subjecting the composition to blow hollow molding,
wherein the long fiber-reinforced polyarylene sulfide resin composition (C) is obtained by coating or impregnating continuous fibers with the melted polyarylene sulfide resin (A), cooling the resulting continuous fibers to obtain a strand, and cutting the strand to a length of 5 mm or more, wherein the fiber reinforcing material (B) is used in the form of a roving in which 1,000 to 4,000 monofilaments having an average fiber diameter of 9 to 23 µm are collected.

In addition, the present invention relates to a blow-molded hollow article comprising:
a polyarylene sulfide resin (A); and
a fiber reinforcing material (B) having a fiber length of 5 mm or more, which is obtained by heating a long fiber-reinforced polyarylene sulfide resin composition containing the polyarylene sulfide resin (A) and the fiber reinforcing material (B) having a fiber length of 5 mm or more at a temperature not lower than a melting point of the resin (A) to melt the resin (A), and wherein the fiber reinforcing material (B) is a glass fiber reinforcing material, and by subjecting the resin composition to blow hollow molding, wherein the fiber reinforcing material (B) is used in the form of a roving in which 1,000 to 4,000 monofilaments having an average fiber diameter of 9 to 23 µm are collected.

The present invention relates also to the use of a long fiber-reinforced polyarylene sulfide resin composition for blow-molded hollow articles comprising:
a polyarylene sulfide resin (A); and
a fiber reinforcing material (B) having a fiber length of 5 mm or more, and wherein the fiber reinforcing material (B) is a glass fiber reinforcing material,
wherein the long fiber-reinforced polyarylene sulfide resin composition comprising the polyarylene sulfide resin (A) and the fiber reinforcing material (B) having a fiber length of 5 mm or more and is a columnar pellet, and wherein the fiber length of the fiber reinforcing material (B) in the pellet is almost the same as the length of the pellet,
   wherein the fiber reinforcing material (B) is used in the form of a roving in which 1,000 to 4,000 monofilaments having an average fiber diameter of 9 to 23 um are collected. Advantageous Effects of Invention

According to the present invention, it is possible to provide a blow-molded hollow article which is excellent in moldability such as draw-down resistance and thickness unevenness in performing blow hollow molding and is excellent in mechanical strength such as impact resistance while maintaining excellent heat resistance of a polyarylene sulfide resin, a method for producing the blow-molded hollow article, a resin composition for blow-molded hollow articles for exclusively providing the blow-molded hollow article, and a method for producing the resin composition.

### Description of Embodiments

A method for producing a blow-molded hollow article containing a polyarylene sulfide resin (A) and a fiber reinforcing material (B) having a fiber length of 5 mm or more in the present invention includes heating a long fiber-reinforced polyarylene sulfide resin composition (C) containing the polyarylene sulfide resin (A) and the fiber reinforcing material (B) having a fiber length of 5 mm or more at a temperature not lower than a melting point of the resin (A) so as to melt the resin (A), and subjecting the long fiber-reinforced polyarylene sulfide resin composition (C) to blow hollow molding.

First, the polyarylene sulfide resin (A) used in the present invention will be described.

The polyarylene sulfide resin (A) has a resin structure having, as a repeating unit, a structure formed by bonding an aromatic ring and a sulfur atom. Specifically, the polyarylene sulfide resin (A) is a resin having, as repeating units, a structure part represented by the following Formula (1) (in the formula, R¹ and R² are each independently a hydrogen atom, an alkyl group having 1 to 4 carbon atoms, a nitro group, an amino group, a phenyl group, a methoxy group, or an ethoxy group), and a trifunctional structure part represented by the following Formula (2). 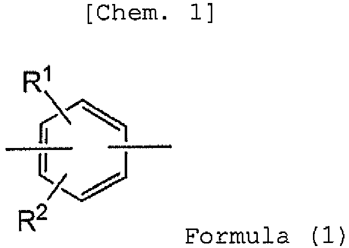 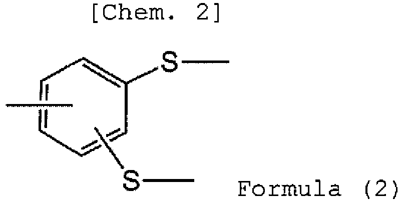 A trifunctional structure part represented by the following Formula (8) is preferably 0.001 to 3 mol%, and particularly preferably 0.01 to 1 mol% with respect to a total number of moles of the trifunctional structure part and the other structure parts.

Here, in the structure part represented by the above Formula (1), R¹ and R² in the formula are preferably hydrogen atoms in view of the mechanical strength of the polyarylene sulfide resin (A). In that case, examples thereof include a structure formed by bonding at a para position represented by the following Formula (3) and a structure formed by bonding at a meta position represented by the following Formula (4). 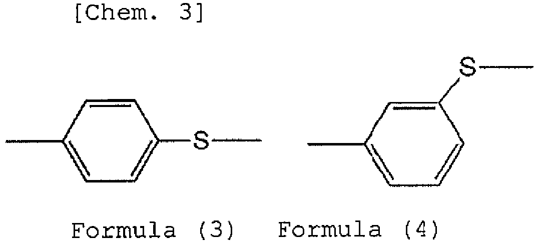 Among them, particularly, a bond of a sulfur atom to an aromatic ring of the repeating unit is preferably a structure formed by bonding at the para position represented by the above structural Formula (3) in view of the heat resistance and the crystallinity of the polyarylene sulfide resin.

The polyarylene sulfide resin (A) may include, not only the structure parts represented by the above Formulae (1) and (2), but also structure parts represented by the following Structural Formulae (5) to (8) such that the structure parts represented by Structural Formulae (5) to (8) are not more than 30 mol% of a total of the structure parts represented by the above Formulae (1) and (2).

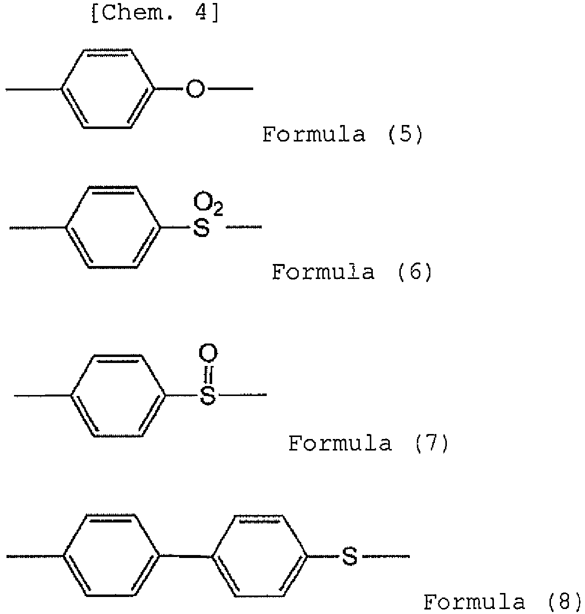

Particularly, in the present invention, the structure parts represented by the above Formulae (5) to (8) are preferably 10 mol% or less in view of the heat resistance and the mechanical strength of the polyarylene sulfide resin. When the polyarylene sulfide resin (A) includes structure parts represented by the above Formulae (5) to (8), the bonding form thereof may form a random copolymer or a block copolymer.

The polyarylene sulfide resin (A) may have a naphthyl sulfide bond in its molecular structure. The naphthyl sulfide bond is preferably not more than 3 mol%, and particularly preferably not more than 1 mol% with respect to a total number of moles of naphthyl sulfide bond and the other structure parts.

The method for producing the polyarylene sulfide resin (A) is not particularly limited. However, examples thereof include 1) a method for polymerizing a dihalogeno aromatic compound, if necessary, with the addition of a polyhalogeno aromatic compound or other copolymerization components, in the presence of sulfur and sodium carbonate, 2) a method for polymerizing a dihalogeno aromatic compound, if necessary, with the addition of a polyhalogeno aromatic compound or other copolymerization components, in the presence of a sulfidizing agent or the like in a polar solvent, and 3) a method for self-condensing p-chlorthiophenol, if necessary, with the addition of a polyhalogeno aromatic compound or other copolymerization components. Among these methods, the method described in 2) is widely used and preferred. During the reaction, an alkali metal salt of a carboxylic acid or a sulfonic acid, or an alkali hydroxide may be added in order to adjust a polymerization degree. Among the methods described in 2), a method for producing a polyarylene sulfide resin including: introducing an aqueous sulfidizing agent into a heated mixture containing an organic polar solvent and a dihalogeno aromatic compound at a rate at which water can be removed from the reaction mixture to react the dihalogeno aromatic compound with the sulfidizing agent in the organic polar solvent, if necessary, with the addition of a polyhalogeno aromatic compound; and controlling the water content in the reaction system in a range of 0.02 to 0.5 mole with respect to 1 mole of the organic polar solvent (see JP-A-7-228699), and a method for reacting a dihalogeno aromatic compound in the presence of a solid alkali metal sulfide and an aprotic polar organic, if necessary, with the addition of a polyhalogeno aromatic compound or other copolymerization components while controlling the content of the organic acid alkali metal salt regarding the alkali metal hydrosulfide and the organic acid alkali metal salt to 0.01 to 0.9 mole with respect to 1 mole of the sulfur source and controlling the water content in the reaction system to 0.02 mole with respect to 1 mole of the aprotic polar organic solvent (see Pamphlet of WO2010/058713) are particularly preferred to obtain the polyarylene sulfide resin. Specific examples of the dihalogeno aromatic compound include p-dihalobenzene, m-dihalobenzene, o-dihalobenzene, 2,5-dihalotoluene, 1,4-dihalonaphthalene, 1-methoxy-2,5-dihalobenzene, 4,4'-dihalobiphenyl, 3,5-dihalobenzoic acid, 2,4-dihalobenzoic acid, 2,5-dihalonitrobenzene, 2,4-dihalonitrobenzene, 2,4-dihaloanisole, p,p'-dihalodiphenyl ether, 4,4'-dihalobenzophenone, 4,4'-dihalodiphenylsulfone, 4,4'-dihalodiphenyl sulfoxide, 4,4'-dihalodiphenyl sulfide, and a compound having an alkyl group having 1 to 18 carbon atoms on the aromatic ring of each of the above compounds. Examples of the polyhalogeno aromatic compound include 1,2,3-trihalobenzene, 1,2,4-trihalobenzene, 1,3,5-trihalobenzene, 1,2,3,5-tetrahalobenzene, 1,2,4,5-tetrahalobenzene, and 1,4,6-trihalonaphthalene. The halogen atom contained in each of the above compounds is preferably a chlorine atom or a bromine atom.

The method for post-treating the reaction mixture containing the polyarylene sulfide resin obtained by the polymerization process is not particularly limited. However, examples thereof include (1) a method including: distilling away the solvent from the reaction mixture under reduced pressure or ordinary pressure after addition or no addition of an acid or a base after the completion of the polymerization reaction; rinsing the solids after the distillation of the solvent with a solvent such as water, a reaction solvent (or an organic solvent having a solubility comparable to that of a low-molecular polymer), acetone, methyl ethyl ketone, and alcohols one or more times; neutralization; water washing; filtering; and drying, (2) a method including: precipitating solid products of polyarylene sulfide, mineral salt and the like by adding, as a precipitation agent, a solvent (which is soluble in the used polymerization solvent, and is a poor solvent with respect to at least the polyarylene sulfide) such as water, acetone, methyl ethyl ketone, alcohols, ethers, halogenated hydrocarbon, aromatic hydrocarbon, and aliphatic hydrocarbon to the reaction mixture after the completion of the polymerization reaction; filtering; rinsing; and drying, (3) a method including: adding a reaction solvent (or an organic solvent having a solubility comparable to that of a low-molecular polymer) to the reaction mixture after the completion of the polymerization reaction, followed by stirring; filtering for removing the low-molecular-weight polymer; performing rinsing with a solvent such as water, acetone, methyl ethyl ketone, and alcohols one or more times; neutralization; water washing; filtering; and drying, (4) a method including: water washing by adding water to the reaction mixture after the completion of the polymerization reaction; filtering; performing an acid treatment by adding an acid during the water washing as necessary; and drying, and (5) a method including: filtering the reaction mixture after the completion of the polymerization reaction; performing rinsing with a reaction solvent one or more times as necessary; water washing; filtering; and drying.

In the post-treatment methods exemplified in (1) to (5), the polyarylene sulfide resin may be dried in vacuum, air, or an inert gas atmosphere such as nitrogen.

The melt viscosity of the polyarylene sulfide resin (A) is not particularly limited as long as it is in a suitable range for blow molding. However, the melt viscosity at a temperature of 300°C and a shear rate of 10 sec⁻¹ is preferably 10 to 500 Pa·s, more preferably 25 to 300 Pa·s, and even more preferably 45 to 200 Pa·s. When the melt viscosity is 10 Pa·s or higher, draw-down is unlikely to occurs, and when the melt viscosity is 500 Pa·s or lower, the stability in extruding a parison is good, and a uniform molded article without thickness unevenness can be easily obtained.

The non-Newtonian index of the polyarylene sulfide resin (A) is not particularly limited as long as it is in a suitable range for blow molding. However, the non-Newtonian index is preferably 0.9 to 1.2.

Regarding the polyarylene sulfide resin used in the present invention as described above, when the polyarylene sulfide resin itself has a high melt viscosity suitable for blow hollow molding and has a straight-chain structure having a low branching degree in which the non-Newtonian index is 0.9 to 1.2 even in a linear structure, the polyarylene sulfide resin reacts with the fiber reinforcing material (B), and thus tends to prevent the melt viscosity of the melted and kneaded material from excessively increasing, exhibit excellent moldability without thickness unevenness, and improve a mechanical strength of a blow-molded hollow article, particularly, impact resistance.

Next, the fiber reinforcing material (B) used in the present invention will be described.

For the glass fiber reinforcing material (B) used in the present invention, the fiber length is 5 mm or more, preferably 5 to 30 mm, more preferably 6 to 20 mm, and even more preferably 10 to 15 mm.

These fiber reinforcing materials (B) can be used in the form of monofilaments. In addition, a roving in which many monofilaments are collected with a sizing agent can be used. As the roving, a roving in which 500 to 6,000 monofilaments having an average fiber diameter of 5 to 50 µm are collected is preferably used, and a roving in which 1,000 to 4,000 monofilaments having an average fiber diameter of 9 to 23 µm are collected is more preferably used. These can also be used in the form of multiple wound yarn of two or more rovings. Examples of the sizing agent include sizing agents containing one or more kinds selected from maleic anhydride-based compounds, urethane-based compounds, acrylic compounds, epoxy-based compounds, and copolymers of the compounds, and sizing agents containing an epoxy-based compound or a urethane-based compound are preferred. Among these, epoxy-based compounds and urethane-based compounds are preferred, and epoxy-based compounds are more preferred. Examples of the epoxy-based compounds include a bisphenol-epichlorohydrin-type epoxy resin, a glycidyl ether-type epoxy resin, a tetraepoxy resin, a novolac-type epoxy resin, glycidylamine, epoxy alkyl ester, and an epoxidized unsaturated compound. Examples of the urethane-based compounds include compounds synthesized from an isocyanate such as m-xylylene diisocyanate (XDI), 4,4'-methylenebis(cyclohexyl isocyanate) (HMDI), and isophorone diisocyanate (IPDI) and a polyester- or polyether-based diol.

Next, the long fiber-reinforced polyarylene sulfide resin composition (C) used in the present invention will be described. The long fiber-reinforced polyarylene sulfide resin composition (C) can be produced based on methods such as the method described in JP-A-2003-192911. For example, a strand obtained by coating or impregnating continuous fibers (monofilaments or rovings) with a melted polyarylene sulfide resin (A) and by then cooling the resulting continuous fibers is cut to a length of 5 mm or more, and thus the long fiber-reinforced polyarylene sulfide resin composition (C) can be obtained.

In the course of preparing the long fiber-reinforced polyarylene sulfide resin composition of the present invention, a polyarylene sulfide resin (A) serving as a base resin is put either solely or after blending with a processing stabilizer, an oxidation stabilizer, a molding aid, or other additives, into a single- or twin-screw extruder having a heater, and then melted and kneaded at a temperature not lower than a melting point of the polyarylene sulfide resin (A), preferably a temperature not lower than the melting point + 10°C, more preferably a temperature in a range of the melting point + 10°C to the melting point + 100°C, and even more preferably a temperature in a range of the melting point + 20°C to the melting point + 50°C to shift into a flowable state. Thereafter, the resulting material is charged in an impregnation apparatus (impregnation die) at a predetermined speed.

As the impregnation apparatus, an opening impregnation apparatus is used in a case where continuous fibers are rovings. The opening impregnation apparatus includes a melted resin storing portion, a fiber guide hole (inlet) formed in a boundary wall on the upstream side or a top board on the upstream side, and a shaping nozzle formed in a boundary wall on the downstream side. In the apparatus, two or more opening pins (fixed so as not to rotate regardless of the movement of long fibers) or opening rolls (which can automatically or associatively rotate with the movement of long fibers) are systemically mounted toward the downstream side, and mounted, in a state in which the two or more opening pins or opening rolls crosslink right and left walls, to be fixed to both of the walls or be rotatable (turnable). The opening pins or opening rolls may be mounted in two or more upper and lower stages via a predetermined gap. In the opening impregnation apparatus, by guiding continuous fibers to the melted resin and moving them around the opening pins or opening rolls in zigzags, or by passing the continuous fibers between two opening pins installed separately from each other at a predetermined interval in two upper and lower stages with no contact with any of the opening pins, opening the rovings and coating or impregnating the opened fibers with the melted resin may be performed.

A strand-like material extruded from the impregnation apparatus is cooled at a temperature lower than the melting temperature of the polyarylene sulfide resin, and preferably a room temperature (23°C), and thus a strand formed by pultrusion-molding endless fibers is obtained. The long fiber-reinforced polyarylene sulfide resin composition of the present invention is obtained as columnar pellets by cutting the obtained strand to a length of 5 mm or more, preferably 5 to 30 mm, more preferably 6 to 20 mm, and even more preferably 10 to 15 mm. Since the long fiber-reinforced polyarylene sulfide resin composition obtained in this manner is provided as the columnar pellets obtained by cutting the strand formed by pultrusion-molding endless fibers, the fiber length of the fiber reinforcing material in the pellet is almost the same as the length of the pellet. When using fibers having such a long fiber length, long fibers are physically entangled in the parison during blow molding, and therefore, draw-down properties can be improved. Furthermore, when applying a sizing agent having reactive properties for increasing the interaction between the resin and surfaces of the fibers, adhesion to the polyarylene sulfide resin increases, and thereby the adhesion at the interface between the fibers and the resin becomes firm so that draw-down properties can be improved. Moreover, by using fibers having a long fiber length, mechanical properties, particularly, impact resistance can be improved.

Regarding the ratio of the polyarylene sulfide resin (A) and the fiber reinforcing material (B) in the long fiber-reinforced polyarylene sulfide resin composition (C), the polyarylene sulfide resin (A) is preferably 99 to 40 parts by mass and the fiber reinforcing material (B) is preferably 1 to 60 parts by mass, with respect to the total 100 parts by mass of the polyarylene sulfide resin (A) and the fiber reinforcing material (B). The polyarylene sulfide resin (A) is more preferably 95 to 60 parts by mass, and the fiber reinforcing material (B) is more preferably 5 to 40 parts by mass. By employing the blending ratios in these ranges, draw-down of the parison is unlikely to occur during molding, and thus there is a tendency that a blow-molded hollow article exhibiting good blow moldability as well as excellent heat resistance and chemical resistance is obtained.

The long fiber-reinforced polyarylene sulfide resin composition of the present invention may contain various fillers (D) in order to further improve performances such as strength, heat resistance, and dimensional stability as long as the advantageous effects of the present invention is not impaired. As such fillers (D), known conventional materials can be used as long as the advantageous effects of the present invention are not impaired, and examples thereof include fillers having various forms such as a granular form and a fibrous form. Specifically, fibrous fillers which have a fiber length of less than 6 mm, such as fibers, e.g., glass fibers, carbon fibers, ceramic fibers, aramid fibers, metal fibers, potassium titanate, silicon carbide, calcium sulfate, and calcium silicate, and natural fibers, e.g. , wallastonite, can be used. Barium sulfate, calcium sulfate, clay, pyrophyllite, bentonite, sericite, zeolite, mica, isinglass, talc, attapulgite, ferrite, calcium silicate, calcium carbonate, magnesium carbonate, and glass beads and the like can also be used. The fillers (D) used in the present invention are not essential components. However, the fillers (D) are preferably added in an amount exceeding 0 part by mass, and generally in an amount of 10 to 500 parts by mass with respect to 100 parts of the polyarylene sulfide resin since various performances such as strength, stiffness, heat resistance, heat dissipation properties, and dimensional stability can be improved depending on the purpose of the filler added.

In addition, in the long fiber-reinforced polyarylene sulfide resin composition used in the present invention, known additives may be blended as long as the advantageous effects of the present invention is not impaired. Examples of such known additives (E) include mold release agents, colorants, heat resistance stabilizers, UV stabilizers, foaming agents, rust inhibitors, flame retardants, and lubricants, and depending on the application, synthetic resins such as polyester, polyamide, polyimide, polyetherimide, polycarbonate, polyphenylene ether, polysulfone, polyether sulfone, polyether ether ketone, polyether ketone, polyarylene, polyethylene, polypropylene, polytetrafluoroethylene, polydifluoroethylene, polystyrene, an ABS resin, an epoxy resin, a silicone resin, a phenol resin, a urethane resin, and a liquid crystal polymer, elastomers such as polyolefin-based rubber, fluororubber, and silicone rubber, coupling agents such as silane coupling agent, and the like may be appropriately blended.

The additives (E) used in the present invention are not essential components. However, the additives (E) are preferably added in an amount exceeding 0 part by mass, and generally in an amount of 10 to 500 parts by mass with respect to 100 parts of the polyarylene sulfide resin since various performances can be improved depending on the purpose of the additive added.

The long fiber-reinforced polyarylene sulfide resin composition of the present invention obtained in this manner is prepared according to the kind and the ratio of the polyarylene sulfide resin (A) and the fiber reinforcing material (B) to be used, and for example, in a case where the resin composition (C) is put into a melt indexer with a cylinder temperature of 316°C and an orifice diameter of 3 mm, and a melt flow rate (g/10 minutes) is measured after applying a load of 10 kg and preheating for 5 minutes, the melt flow rate is preferably 10 to 100 g/10 minutes, more preferably 20 to 80 g/10 minutes, and even more preferably 30 to 60 g/10 minutes. The melt flow rate is preferably 100 g/10 minutes or less since there is a tendency that a variation in the thickness of a molded article is suppressed, thereby obtaining a blow molded article having excellent uniformity. In addition, the melt flow rate is preferably 10 g/10 minutes or higher since there is a tendency that gelation can be suppressed.

The long fiber-reinforced polyarylene sulfide resin composition of the present invention can provide a blow-molded hollow article which is excellent in moldability such as draw-down resistance and thickness unevenness in performing blow hollow molding and is excellent in mechanical strength such as impact resistance while maintaining excellent heat resistance of a polyarylene sulfide resin, and thus can be preferably used for use in blow-molded hollow articles.

Next, the blow-molded hollow article of the present invention will be described.

Regarding the blow-molded hollow article of the present invention, the long fiber-reinforced polyarylene sulfide resin composition (C) is heated at a temperature not lower than a melting point of the resin (A) to melt the resin (A), and is then subjected to blow hollow molding.

As a blow hollow molding method, a known method may be used as long as the advantageous effects of the present invention are not impaired, and examples thereof include a method including: supplying the resin composition (C) to a melt extruder having a screw; melting the resin composition (C) by heating at a temperature not lower than a melting temperature of the resin (A), and preferably at 290°C to 320°C; subjecting the resin composition (C) to melt extrusion at a screw rotation speed of 50 to 250 rpm and a discharge rate of 5 to 25 kg/h; and molding a parison with a die gap of 1 to 10 mm, followed by molding into a target two- or three-dimensional hollow molded article. Examples of the screw form include full-flight-type single screws, single screws having a mixing mechanism such as Dulmage types, Maddok types, and types with a pin, and same direction rotation- or different direction rotation-type twin screws. Here, full-flight-type single screws are preferably used, and single screws which are full-flight-type single screws and have a compression ratio of 0.1 to 5 are more preferably used. Since glass fiber fragmentation by shearing during melting of the resin can be suppressed, the compression ratio is more preferably 0.5 to 3, and particularly preferably 1 to 2. Representative examples of the known blow molding method include a direct blow method, an accumulator blow method, and a multi-dimensional blow method. Alternatively, needless to say, it is also possible to employ a multilayer blow molding method, an exchange blow molding method, or the like that is used in combination with other materials.

Since the blow molded article of the present invention obtained in this manner contains a polyarylene sulfide resin and a fiber reinforcing material having a fiber length of 5 mm or more, preferably 5 to 30 mm, more preferably 6 to 20 mm, and even more preferably 10 to 15 mm, has excellent moldability, and is excellent in various performances such as heat resistance, dimensional stability, chemical resistance, and a mechanical strength, e.g., impact resistance, cold-thermal impact resistance, which are inherent in the polyarylene sulfide resin, the blow molded article can be widely used as a hollow molded article such as a bottle, a tank, or a duct in containers for a medicinal solution, air-conditioning ducts, ducts and pipes for a high-temperature gas discharged from internal combustion engines such as for automobiles or fuel cells, and the like.

### Examples

Hereinafter, the present invention will be described in more detail using examples, but is not limited only to these examples.

### (Examples 1 to 11 and Comparative Example 1)

### (Production of Fiber-Reinforced Polyarylene Sulfide Resin Composition)

While a polyarylene sulfide resin described in Table 1 was put into a twin-screw extruder, and melted and kneaded at a resin composition discharge rate of 25 kg/hr, a screw rotation speed of 250 rpm, and a cylinder setting temperature of 310°C, rovings (fiber diameter: 10 to 20 µm) of glass fibers described in Table 1 were continuously supplied to an impregnation die installed at a tip of the extruder at a ratio of 5 to 50 parts by mass with respect to 100 parts by mass of the total of the polyarylene sulfide resin and the glass fibers, and were extruded to prepare a strand-like material in which the glass fibers was coated with the melted polyarylene sulfide resin. Then, a strand was cooled with air at 23°C, and was cut to a length of 2 to 20 mm using a strand cutter to thereby obtain fiber-reinforced polyarylene sulfide resin composition pellets.

### (Production of Blow Molded Article)

The resin composition pellets were supplied to a blow molding machine equipped with a 45 mmϕ-extruder (a full-flight-type single screw having a compression ratio of 1), and extruded at a resin composition discharge rate of 25 kg/hr, a screw rotation speed of 250 rpm, and a cylinder setting temperature of 290°C to mold a parison having an outer diameter of 30 mm and a thickness of 4 mm. Then, air was allowed to blow into the mold, and thus a cylindrical container having a height of 250 mm, an outer diameter of 50 mm, and a thickness of approximately 2 to 3 mm was molded.

### (Comparative Examples 2 to 4)

### (Production of Fiber-Reinforced Polyarylene Sulfide Resin Composition)

A polyarylene sulfide resin was supplied to a twin-screw extruder to be melted and kneaded at a resin composition discharge rate of 25 kg/hr, a screw rotation speed of 250 rpm, and a cylinder setting temperature of 310°C, while glass fibers were supplied from a side feeder to the twin-screw extruder at a ratio of 40 parts by mass with respect to the total 100 parts by mass of the polyarylene sulfide resin composition and the glass fibers, and then extruded. Thus, a strand-like material containing the glass fibers was prepared. Then, a strand was obtained by cooling the strand-like material with air at 23°C, and cut the strand-like material to a length of approximately 5 mm using a strand cutter, and thus fiber-reinforced polyarylene sulfide resin composition pellets were obtained.

### (Production of Blow Molded Article)

The resin composition pellets were supplied to a blow molding machine equipped with a 45 mmϕ-extruder (a full-flight-type single screw having a compression ratio of 1), and extruded at a resin composition discharge rate of 25 kg/hr, a screw rotation speed of 250 rpm, and a cylinder setting temperature of 290°C to mold a parison having an outer diameter of 30 mm and a thickness of 4 mm. Then, air was allowed to blow into the mold, and thus a cylindrical container having a height of 250 mm, an outer diameter of 50 mm, and a thickness of approximately 2 to 3 mm was molded.

Various tests were performed as follows.

### [Melt Viscosity/Draw-Down Resistance/Extrusion Stability]

The fiber-reinforced polyarylene sulfide resin composition pellets obtained in Examples 1 to 11 and Comparative Examples 1 to 4 were put into a melt indexer (cylinder temperature: 316°C, orifice system: 3 mm), and a melt flow rate was measured after applying a load of 10 kg and preheating for 5 minutes.

Using the obtained melt viscosity as an index of draw-down resistance and extrusion stability during blow molding, those having a melt flow rate of 100 to 10 g/10 minutes were evaluated as "○" (good draw-down resistance and extrusion stability), those having a melt flow rate less than 10 g/10 minutes were evaluated as "△" (poor extrusion stability), and those having a melt flow rate exceeding 100 g/10 minutes were evaluated as "×" (poor draw-down resistance).

### [Uniformity]

A thickness at 5 arbitrary points each from an upper portion (30 mm from the upper end) and a lower portion (30 mm from the lower end) of the body of each of the blow molded articles obtained in Examples 1 to 11 and Comparative Examples 1 to 4 was measured, and the uniformity thereof was evaluated based on the following criteria:
Those in which the difference between an average thickness of the upper portion and an average thickness of the lower portion was within 0.2 mm were evaluated as "⊚",
those in which the above difference in the thickness was greater than 0.2 mm but within 0.5 mm were evaluated as "O",
those in which the above difference in the thickness was greater than 0.5 mm but within 1.0 mm were evaluated as "△", and
those in which the above difference in the thickness was greater than 1.0 mm were evaluated as "×".

### [Heat Resistance]

The fiber-reinforced polyarylene sulfide resin composition pellets obtained in Examples 1 to 11 and Comparative Examples 1 to 4 were press-molded at a cylinder temperature of 300°C and a mold temperature of 140°C to mold a dumbbell-shaped test piece for a tensile test. This test piece was heated for 3,000 hours in an oven at 260°C, and a tensile strength after the test piece was taken out was measured. A reduction from a tensile strength of a test piece which was not heated was indicated by a retention rate (%). Those having a retention rate of 80% or higher were evaluated as "⊚", those having a retention rate of 60% or higher and less than 80% were evaluated as "○", those having a retention rate of 40% or higher and less than 60% were evaluated as "△", and those having a retention rate of less than 40% were evaluated as "×".

### [Impact Resistance]

A central portion of the dumbbell-shaped test piece for a tensile test prepared in the heat resistance test was cut into a rod shape having a length of 80 mm, a width of 10 mm, and a thickness of 4 mm to serve as an impact resistance test piece. A Charpy impact test was performed based on ISO 179 to measure an impact strength (kJ/mm²).

### [Measurement of Fibers of Fiber Reinforcing Material in Pellets or Molded Article]

The resin composition pellets or the blow-molded hollow article was exposed for 2 hours at 550°C in a muffle furnace, 500 glass fibers contained in the ash were randomly picked, a fiber length and a fiber diameter were measured using a digital microscope, and a number average fiber length and a number average fiber diameter were calculated. From the values of the number average fiber length and the number average fiber diameter obtained, a value of (number average fiber length/number average fiber diameter) was calculated and used as an aspect ratio.

**[Table 1]**

| | Examples | | | | | | |
|---|---|---|---|---|---|---|---|
| | 1 | 2 | 3 | 4 | 5* | 6 | 7 |
| PPS (1) | 60 | 60 | 60 | | 60 | | 60 |
| PPS (2) | | | | 60 | | | |
| PPS (3) | | | | | | 60 | |
| Fiber reinforcing Material (1) | 40 | 40 | | 40 | | 40 | |
| Fiber reinforcing Material (2) | | | 40 | | | | |
| Fiber reinforcing Material (3) | | | | | 40 | | |
| Fiber reinforcing Material (4) | | | | | | | 40 |

| Evaluation and Measurement of Resin Pellets | | | | | | | |
|---|---|---|---|---|---|---|---|
| Length of Resin Pellets (mm) | 10 | 5 | 10 | 10 | 10 | 10 | 10 |
| Number Average Glass Fiber Length (mm) | 10 | 5 | 10 | 10 | 10 | 10 | 10 |
| Aspect Ratio of Glass Fiber | 1, 000 | 500 | 1,000 | 1, 000 | 200 | 1, 000 | 1,000 |
| Melt Viscosity [g/10 minutes] | 46 | 72 | 61 | 18 | 65 | 88 | 33 |
| Draw-Down Resistance/Extrusion Stability | ○ | ○ | ○ | ○ | ○ | ○ | ○ |

| Evaluation and Measurement of Molded Article | | | | | | | |
|---|---|---|---|---|---|---|---|
| Number Average Glass Fiber Length (mm) | 10 | 5 | 10 | 10 | 10 | 10 | 10 |
| Uniformity | ⊚ | ⊚ | ⊚ | ⊚ | ○ | ○ | Δ |
| Heat Resistance | ⊚ | ⊚ | ⊚ | ⊚ | ○ | ○ | ⊚ |
| Impact Resistance [kJ/m²] | 60 | 55 | 58 | 58 | 52 | 48 | 50 |

| | | | | | | | |
|---|---|---|---|---|---|---|---|
| * Reference Example | | | | | | | |

**[Table 2]**

| | | | | | |
|---|---|---|---|---|---|
| | Examples | | | | Comparative Example 1 |
| | 8 | 9 | 10 | 11 | |
| PPS (1) | 60 | 95 | 80 | 50 | 60 |
| PPS (2) | | | | | |
| PPS (3) | | | | | |
| Fiber reinforcing Material (1) | 40 | 5 | 20 | 50 | 40 |
| Fiber reinforcing Material (2) | | | | | |
| Fiber reinforcing Material (3) | | | | | |
| Fiber reinforcing Material (4) | | | | | |

| Evaluation and Measurement of Resin Pellets | | | | | |
|---|---|---|---|---|---|
| Length of Resin Pellets (mm) | 20 | 10 | 10 | 10 | 2 |
| Number Average Glass Fiber Length (mm) | 20 | 10 | 10 | 10 | 2 |
| Aspect Ratio of Glass Fiber | 2,000 | 1,000 | 1, 000 | 1,000 | 200 |
| Melt Viscosity [g/10 minutes] | 12 | 90 | 68 | 20 | 165 |
| Draw-Down Resistance/Extrusion Stability | ○ | ○ | ○ | ○ | × |

| Evaluation and Measurement of Molded Article | | | | | |
|---|---|---|---|---|---|
| Number Average Glass Fiber Length (mm) | 20 | 10 | 10 | 10 | 2 |
| Uniformity | ○ | ⊚ | ⊚ | ⊚ | × |
| Heat Resistance | ⊚ | ⊚ | ⊚ | ⊚ | ⊚ |
| Impact Resistance [kJ/m²] | 75 | 18 | 30 | 70 | 50 |

**[Table 3]**

| | Comparative Examples | | |
|---|---|---|---|
| | 2 | 3 | 4 |
| PPS (1) | 60 | 60 | 55 |
| Fiber reinforcing Material (5) | 40 | | |
| Fiber reinforcing Material (6) | | 40 | 40 |
| Polyolefin | | | 5 |

| Evaluation and Measurement of Resin Pellets | | | |
|---|---|---|---|
| Length of Resin Pellets (mm) | 5 | 5 | 5 |
| Number Average Glass Fiber Length (mm) | 0.8 | 0.3 | 0.3 |
| Aspect Ratio of Glass Fiber | | | |
| Melt Viscosity [g/10 minutes] | 440 | 500 | 350 |
| Draw-Down Resistance/Extrusion Stability | × | × | × |

| Evaluation and Measurement of Molded Article | | | |
|---|---|---|---|
| Number Average Glass Fiber Length (mm) | 0.8 | 0.3 | 0.3 |
| Uniformity | ○ | ○ | ⊚ |
| Heat Resistance [°C] | ○ | ○ | △ |
| Impact Resistance [kJ/m²] | 42 | 40 | 53 |

The raw materials in the tables are as follows.
PPS (1); "DSP MA-505" manufactured by DIC Corporation (V6 melt viscosity: 50 Pa·s, non-NT index: 1.2)
PPS (2); "DSP MA-520" manufactured by DIC Corporation (V6 melt viscosity: 150 Pa·s, non-NT index: 1.2)
PPS (3); "DSP MA-501" manufactured by DIC Corporation (V6 melt viscosity: 30 Pa·s, non-NT index: 1.2)
* The V6 melt viscosity of the PPS resin is a value measured using a flow tester CFT-500C manufactured by Shimadzu Corporation after holding for 6 minutes at 300°C with a load of 1.96 × 10⁶ Pa and L/D = 10/1.
Fiber reinforcing Material (1); Glass fiber roving (E-glass, fiber diameter: 10 µm, epoxy-based sizing agent)
Fiber reinforcing Material (2); Glass fiber roving (E-glass, fiber diameter: 10 µm, epoxy-urethane-based sizing agent)
Fiber reinforcing Material (3); Glass fiber roving (E-glass, fiber diameter: 10 µm, urethane-based sizing agent)
Fiber reinforcing Material (4); Glass fiber roving (E-glass, fiber diameter: 50 µm, epoxy-based sizing agent)
Fiber reinforcing Material (5); Glass fiber chopped strand (E-glass, fiber diameter: 10 µm, fiber length: 10 mm, epoxy-based sizing agent)
Fiber reinforcing Material (6); Glass fiber chopped strand (E-glass, fiber diameter: 10 µm, fiber length: 3 mm, epoxy-based sizing agent)
Polyolefin: Epoxy modified polyolefin ("Bondfast-E" manufactured by Mitsui Chemicals, Inc.)

## Claims

1. A method for producing a blow-molded hollow article containing a polyarylene sulfide resin (A) and a fiber reinforcing material (B) having a fiber length of 5 mm or more, comprising:
heating a long fiber-reinforced polyarylene sulfide resin composition (C) containing the polyarylene sulfide resin (A) and the fiber reinforcing material (B) having a fiber length of 5 mm or more at a temperature not lower than a melting point of the resin (A) so as to melt the resin (A) ; and wherein the fiber reinforcing material (B) is a glass fiber reinforcing material, and
subjecting the composition to blow hollow molding,
wherein the long fiber-reinforced polyarylene sulfide resin composition (C) is obtained by coating or impregnating continuous fibers with the melted polyarylene sulfide resin (A), cooling the resulting continuous fibers to obtain a strand, and cutting the strand to a length of 5 mm or more, wherein the fiber reinforcing material (B) is used in the form of a roving in which 1,000 to 4,000 monofilaments having an average fiber diameter of 9 to 23 um are collected.

2. The method for producing a blow-molded hollow article according to claim 1,
wherein the fiber reinforcing material (B) has an aspect ratio of 120 to 3,000.

3. The method for producing a blow-molded hollow article according to claim 1,
wherein a proportion of the polyarylene sulfide resin (A) is 99 to 40 parts by mass and a proportion of the fiber reinforcing material (B) is 1 to 60 parts by mass, with respect to the total 100 parts by mass of the polyarylene sulfide resin (A) and the fiber reinforcing material (B).

4. The method for producing a blow-molded hollow article according to claim 1, comprising:
heating the long fiber-reinforced polyarylene sulfide resin composition (C) at a temperature not lower than a melting point of the resin (A) in a melt extruder having a full-flight-type single screw so as to melt the resin; and
subjecting the resin composition to blow hollow molding.

5. A blow-molded hollow article comprising:
a polyarylene sulfide resin (A); and
a fiber reinforcing material (B) having a fiber length of 5 mm or more, which is obtained by heating a long fiber-reinforced polyarylene sulfide resin composition containing the polyarylene sulfide resin (A) and the fiber reinforcing material (B) having a fiber length of 5 mm or more at a temperature not lower than a melting point of the resin (A) to melt the resin (A), and wherein the fiber reinforcing material (B) is a glass fiber reinforcing material, and by subjecting the resin composition to blow hollow molding, wherein the fiber reinforcing material (B) is used in the form of a roving in which 1,000 to 4,000 monofilaments having an average fiber diameter of 9 to 23 um are collected.

6. Use of a long fiber-reinforced polyarylene sulfide resin composition for blow-molded hollow articles comprising:
a polyarylene sulfide resin (A); and
a fiber reinforcing material (B) having a fiber length of 5 mm or more, and wherein the fiber reinforcing material (B) is a glass fiber reinforcing material,
wherein the long fiber-reinforced polyarylene sulfide resin composition comprising the polyarylene sulfide resin (A) and the fiber reinforcing material (B) having a fiber length of 5 mm or more and is a columnar pellet, and wherein the fiber length of the fiber reinforcing material (B) in the pellet is almost the same as the length of the pellet,
wherein the fiber reinforcing material (B) is used in the form of a roving in which 1,000 to 4,000 monofilaments having an average fiber diameter of 9 to 23 um are collected.

## Patentansprüche

1. Verfahren zur Herstellung eines blasgeformten Hohlkörpers, der ein Polyarylensulfidharz (A) und ein Faserverstärkungsmaterial (B) mit einer Faserlänge von 5 mm oder mehr enthält, umfassend:
Erhitzen einer langfaserverstärkten Polyarylensulfidharzzusammensetzung (C), die das Polyarylensulfidharz (A) und das Faserverstärkungsmaterial (B) mit einer Faserlänge von 5 mm oder mehr enthält, auf eine Temperatur, die nicht niedriger als der Schmelzpunkt des Harzes (A) ist, um das Harz (A) zu schmelzen; und wobei das Faserverstärkungsmaterial (B) ein Glasfaserverstärkungsmaterial ist, und
Unterziehen der Zusammensetzung einer Hohlblasformung,
wobei die langfaserverstärkte Polyarylensulfidharzzusammensetzung (C) durch Beschichten oder Imprägnieren von Endlosfasern mit dem geschmolzenen Polyarylensulfidharz (A), Abkühlen der resultierenden Endlosfasern, um einen Strang zu erhalten, und Schneiden des Strangs auf eine Länge von 5 mm oder mehr erhalten wird,
wobei das Faserverstärkungsmaterial (B) in Form eines Rovings verwendet wird, in dem 1.000 bis 4.000 Monofilamente mit einem durchschnittlichen Faserdurchmesser von 9 bis 23 µm zusammengefasst sind.

2. Verfahren zur Herstellung eines blasgeformten Hohlkörpers nach Anspruch 1,
wobei das Faserverstärkungsmaterial (B) ein Längenverhältnis von 120 bis 3.000 aufweist.

3. Verfahren zur Herstellung eines blasgeformten Hohlkörpers nach Anspruch 1,
wobei ein Anteil des Polyarylensulfidharzes (A) 99 bis 40 Massenteile und ein Anteil des Faserverstärkungsmaterials (B) 1 bis 60 Massenteile beträgt, bezogen auf die gesamten 100 Massenteile des Polyarylensulfidharzes (A) und des Faserverstärkungsmaterials (B).

4. Verfahren zur Herstellung eines blasgeformten Hohlkörpers nach Anspruch 1, umfassend:
Erhitzen der langfaserverstärkten Polyarylensulfidharzzusammensetzung (C) auf eine Temperatur, die nicht unter dem Schmelzpunkt des Harzes (A) liegt, in einem Einschnecken-Schmelzextruder vom Vollflugtyp, um das Harz zu schmelzen; und
Unterziehen der Harzzusammensetzung einer Hohlblasformung.

5. Blasgeformter Hohlkörper, umfassend:
ein Polyarylensulfidharz (A); und
ein Faserverstärkungsmaterial (B) mit einer Faserlänge von 5 mm oder mehr, das erhalten wird durch Erhitzen einer langfaserverstärkten Polyarylensulfidharzzusammensetzung, die das Polyarylensulfidharz (A) und das Faserverstärkungsmaterial (B) mit einer Faserlänge von 5 mm oder mehr enthält, auf eine Temperatur, die nicht niedriger als der Schmelzpunkt des Harzes (A) ist, um das Harz (A) zu schmelzen, und wobei das Faserverstärkungsmaterial (B) ein glasfaserverstärkendes Material ist, und durch Unterziehen der Harzzusammensetzung einem Hohlblasformen,
wobei das Faserverstärkungsmaterial (B) in Form eines Rovings verwendet wird, in dem 1.000 bis 4.000 Monofilamente mit einem durchschnittlichen Faserdurchmesser von 9 bis 23 µm zusammengefasst sind.

6. Verwendung einer langfaserverstärkten PolyarylensulfidHarzzusammensetzung für blasgeformte Hohlkörper, umfassend:
ein Polyarylensulfidharz (A); und
ein Faserverstärkungsmaterial (B) mit einer Faserlänge von 5 mm oder mehr, und wobei das Faserverstärkungsmaterial (B) ein Glasfaserverstärkungsmaterial ist,
wobei die langfaserverstärkte Polyarylensulfidharzzusammensetzung, die das Polyarylensulfidharz (A) und das Faserverstärkungsmaterial (B) mit einer Faserlänge von 5 mm oder mehr umfasst, ein säulenförmiges Pellet ist, und wobei die Faserlänge des Faserverstärkungsmaterials (B) in dem Pellet fast die gleiche ist wie die Länge des Pellets,
wobei das Faserverstärkungsmaterial (B) in Form eines Rovings verwendet wird, in dem 1.000 bis 4.000 Monofilamente mit einem durchschnittlichen Faserdurchmesser von 9 bis 23 µm zusammengefasst sind.

## Revendications

1. Procédé de production d'un article creux moulé par soufflage contenant une résine de poly(sulfure d'arylène) (A) et un matériau de renforcement en fibres (B) ayant une longueur de fibre de 5 mm ou plus, comprenant :
chauffage d'une composition de résine de poly(sulfure d'arylène) renforcée par des fibres longues (C) contenant la résine de poly(sulfure d'arylène) (A) et le matériau de renforcement des fibres (B) ayant une longueur de fibre de 5 mm ou plus à une température non inférieure à un point de fusion de la résine (A) de façon à faire fondre la résine (A) ; et dans lequel le matériau de renforcement des fibres (B) est un matériau de renforcement des fibres de verre, et
soumettre la composition à un moulage creux par soufflage,
dans lequel la composition de résine de poly(sulfure d'arylène) renforcée par des fibres longues (C) est obtenue en revêtant ou en imprégnant des fibres continues avec la résine de poly(sulfure d'arylène) fondue (A), en refroidissant les fibres continues résultantes pour obtenir un brin, et en coupant le brin à une longueur de 5 mm ou plus,
dans lequel le matériau de renforcement des fibres (B) est utilisé sous la forme d'une mèche dans laquelle 1 000 à 4 000 monofilaments ayant un diamètre de fibre moyen de 9 à 23 µm sont collectés.

2. Procédé de production d'un article creux moulé par soufflage selon la revendication 1,
dans lequel le matériau de renforcement des fibres (B) a un rapport d'aspect de 120 à 3 000.

3. Procédé de production d'un article creux moulé par soufflage selon la revendication 1,
dans lequel une proportion de la résine de poly(sulfure d'arylène) (A) est de 99 à 40 parties en masse et une proportion du matériau de renforcement en fibres (B) est de 1 à 60 parties en masse, par rapport au total de 100 parties en masse de la résine de poly(sulfure d'arylène) (A) et du matériau de renforcement en fibres (B).

4. Procédé de production d'un article creux moulé par soufflage selon la revendication 1, comprenant :
chauffer la composition de résine de poly(sulfure d'arylène) renforcée par des fibres longues (C) à une température qui n'est pas inférieure au point de fusion de la résine (A) dans une extrudeuse à fusion ayant une vis unique de type à plein vol de manière à faire fondre la résine ; et
soumettre la composition de résine à un moulage creux par soufflage.

5. Article creux moulé par soufflage comprenant :
une résine de poly(sulfure d'arylène) (A) ; et
un matériau de renforcement de fibres (B) ayant une longueur de fibres de 5 mm ou plus, qui est obtenu en chauffant une composition de résine de poly(sulfure d'arylène) renforcée par des fibres longues contenant la résine de poly(sulfure d'arylène) (A) et le matériau de renforcement de fibres (B) ayant une longueur de fibres de 5 mm ou plus à une température non inférieure au point de fusion de la résine (A) pour faire fondre la résine (A), et dans lequel le matériau de renforcement de fibres (B) est un matériau de renforcement de fibres de verre, et en soumettant la composition de résine à un moulage creux par soufflage,
dans lequel le matériau de renforcement des fibres (B) est utilisé sous la forme d'une mèche dans laquelle 1 000 à 4 000 monofilaments ayant un diamètre de fibre moyen de 9 à 23 µm sont collectés.

6. Utilisation d'une composition de résine de poly(sulfure d'arylène) renforcée par des fibres longues pour des articles creux moulés par soufflage comprenant :
une résine de poly(sulfure d'arylène) (A) ; et
un matériau de renforcement de fibres (B) ayant une longueur de fibre de 5 mm ou plus, et dans lequel le matériau de renforcement de fibres (B) est un matériau de renforcement de fibres de verre,
dans laquelle la composition de résine de poly(sulfure d'arylène) renforcée par des fibres longues comprenant la résine de poly(sulfure d'arylène) (A) et le matériau de renforcement des fibres (B) ayant une longueur de fibre de 5 mm ou plus et est une pastille en forme de colonne, et dans laquelle la longueur de fibre du matériau de renforcement des fibres (B) dans la pastille est presque la même que la longueur de la pastille,
dans laquelle le matériau de renforcement des fibres (B) est utilisé sous la forme d'une mèche dans laquelle 1 000 à 4 000 monofilaments ayant un diamètre de fibre moyen de 9 à 23 µm sont collectés.
